# EUROPÄISCHE PATENTSCHRIFT

(11) **EP 0 541 044 B1**
(45) Veröffentlichungstag und Bekanntmachung des Hinweises auf die Patenterteilung: **16.08.1995**
(21) Anmeldenummer: 92118817.3
(22) Anmeldetag: 03.11.1992
(51) Int. Cl.: H05B 7/06

(54) **Gleichstrom-Lichtbogenofen**
DC arc furnace
Four à arc à courant continu

(30) Priorität: 04.11.1991 US 787059
(43) Veröffentlichungstag der Anmeldung: 12.05.1993
(73) Patentinhaber: DEUTSCHE VOEST-ALPINE INDUSTRIEANLAGENBAU GMBH, 40094 Düsseldorf (DE)
(72) Erfinder: Meredith, Dane, brandon, Florida 33511 (US)
(74) Vertreter: Pfenning, Meinig & Partner

(56) Entgegenhaltungen:
- EP-A- 0 150 483
- EP-A- 0 156 126
- EP-A- 0 428 150

## Beschreibung

Die Erfindung betrifft einen Gleichstrom-Lichtbogenofen gemäß dem Oberbegriff des Patentanspruches 1.

Aus der DE-A-34 13 745 ist ein Gleichstrom-Lichtbogenofen bekannt, bei dem die Bodenauskleidung in Form eines Mehrschichtaufbaus ausgebildet ist. Dabei ist das Bodenfutter an seiner Berührungsfläche mit der Schmelze eine den Boden des Ofengefäßes bildende Stampfmasse, in die elektrisch leitende Metallteile in Form von Stiften oder Blechen eingeschlossen sind. Auch kann diese Schicht aus Ziegeln mit Blechzwischenlagen oder Blecheinlagen, an die sich eine Schicht aus elektrisch leitenden Ziegeln anschließt, bestehen. Diese nächstfolgende Schicht ist eine aus elektrisch leitenden Ziegein bestehende Schicht, die aus Magnesitgraphit bestehen kann. An diese Schicht schließt sich zum Gefäßboden hin eine Schicht an, die abwechselnd aus elektrisch leitenden Ziegein und Isolierziegeln besteht. Schließlich folgt als letzte Schicht nochmals eine solche aus elektrisch leitenden Ziegeln, auf die Anschlußkontakte folgen. In einer Ausführungsform dieses Gleichstrom-Lichtbogenofens enthält das Bodenkontaktteil eine vorgefertigte zylindrische Blechform, deren Boden mit festgeschweißten, vertikalen stromleitenden Blechen, Stangen oder Stiften versehen ist.

Bei diesem Ofen geht es darum, das allseits bekannte Problem zwischen erforderlicher Wärmeisolation, Wärmeabführung und der ebenfalls unabdingbaren elektrischen Leitfähigkeit zur Ausbildung des Lichtbogens durch die Kombination und definierte Anordnung wärmeisolierender Schichten und elektrisch leitender Bereiche zu lösen. Dies erfordert bei der Konstruktion eines solchen Gleichstrom-Lichtbogenofens einen großen Aufwand, da die verschiedenen Materialien in den verschiedenen Schichten entsprechend angeordnet werden müssen, um den gewünschten Zweck zu erreichen. Bei der vorstehend genannten Anodenkonstruktion muß nach dem nicht unerheblichen Verschleiß der obersten mit Metalleitern durchsetzten Schicht bzw. Lage nach relativ kurzer Betriebsdauer eine Neuzustellung erfolgen, was entsprechende kurze Standzeiten bedingt.

Aus EP-A-0 058 817 ist eine Kontaktelektrodenanordnung für Lichtbogen- oder Widerstandsschmelzöfen bekannt, bei der auf einer außerhalb der Ofenausmauerung angeordneten Basisplatte die Hälse mehrerer Elektroden elektrisch leitend befestigt sind. Die Elektroden ragen durch die Ausmauerung und stehen mit der Schmelze in direktem Kontakt. Diese Anordnung hat den Nachteil, daß durch die starke Wärmeabfuhr über die Elektrodenstäbe und die Stromkonzentration auf eine relativ geringe Fläche eine aufwendige Kühleinrichtung einschließlich deren Überwachung vorgesehen werden muß. Die große elektrische Leitfähigkeit und damit auch die entsprechend gute Wärmeleitfähigkeit der Elektroden schafft hier erhebliche Probleme für die nötige Wärmeabfuhr. Weiterhin befinden sich die Elektrodenköpfe in der Zone direkt unter der Oberelektrode, wo sie durch den Einfluß des Lichtbogens und der turbulenten Schmelzbadbewegung einem erhöhten Verschleiß unterworfen sind.

Dadurch, daß die Elektroden in der Mitte durch den Ofenboden hindurchragen, ergeben sich neben den ungünstigen Kühlverhältnissen jedoch auch wesentliche weitere Nachteile. So bestehen erhöhte Gefahren im Falle eines Herddurchbruchs oder auch dadurch, daß sich im Schmelzgut befindliches Blei aufgrund seines großen spezifischen Gewichtes und der bei den herrschenden Temperaturen geringen Viskosität durch die Spalten der Ausmauerung bzw. zwischen Ausmauerung und Elektroden gelangen kann und Schäden im Isolationsbereich des Ofens hervorgerufen werden können.

Hier setzt die Erfindung ein, deren Aufgabe es ist, bei einem Gleichstrom-Lichtbogenofen die Bodenelektrode so auszubilden, daß ein verschleißarmer Betrieb bei nur geringer Kühlung sowie ansonsten verbesserten Betriebseigenschaften möglich ist und der in einfacher Form an verschiedene Ausführungsformen von Gleichstrom-Lichtbogenöfen anpaßbar ist, d.h. mit kostengünstigem Montageaufwand erstellt werden kann.

Erfindungsgemäß wird diese Aufgabe durch die im kennzeichnenden Teil des Patentanspruches 1 genannten Merkmale gelöst.

Vorteilhafte Ausgestaltungen und Weiterbildungen geben die Merkmale der Unteransprüche an.

Durch das als elektrischer Leiter dienende Bodenblech, auf dem sich in unmittelbar flächigem Kontakt eine Mehrzahl von Elektrodensegmenten befindet, die bevorzugt ringförmig angeordnet sind und auf diesen durch die elektrisch nichtleitende Stampfmasse hindurch erstreckende Segmentleiter befestigt sind, kann dieser Teil der als Anode geschalteten Elektrode, der aus vorgefertigten Elementen besteht, bei der Montage des Ofenherdbereiches in einfacher Form zusammengefügt werden. Anschließend wird in bekannter Weise die Stampfmasse eingebracht und die Zwischenräume zwischen den einzelnen Segmentleitern verfüllt, ohne dass ein bestimmter Schichtaufbau beachtet werden muß.

Durch die Anordnung des die Bodenelektrode bildenden geschlossenen Bodenbleches unterhalb der die Zustellung bildenden Stampfmasse und den vollständigen Einschluß der Segmentleiter mit der Stampfmasse kann keine Gefährdung des Isolierbereiches durch in der Schmelze befindliches Blei mehr auftreten, da sich die Isolation in der seitlichen Gefäßwand befindet.

Die einzelnen Elektrodensegmente können einheitlich ausgeführt sein und im Zusammenwirken mit den anderen stromführenden Teilen, den seitlich angebrachten Stromschienen und dem an der Gefäßinnenwand des Untergefäßes anliegenden Kupferring ein gleichförmiges elektrisches Stromlinienfeld erzeugen. Durch variierte Gestaltung der Elektrodensegmente und deren gezielte Anordnung kann entsprechend gewünschter Einfluß auf die Ausbildung des magnetischen Feldes zur Auslenkung des Lichtbogens oder zur Kompensation vorhandener Auslenkungen genommen werden.

Es ist ebenfalls in äußerst einfacher Weise durch unterschiedliche Gestaltung der Segmentleiter auf den Elektrodensegmenten möglich, das magnetische Feld und damit die Ausbildung des Lichtbogens zu beeinflussen. Die Segmentleiter können als Bleche, Stäbe, Röhren oder Halbröhren ausgeführt werden, wobei die beiden letztgenannten Formen eine größere Stabilität aufweisen und bei ihnen auf Abstandshalter zur Einhaltung eines definierten Abstandes der einzelnen Segmentleiter verzichtet werden kann.

Neben den unterschiedlichen Formen der Segmentleiter kann auch in gleicher Weise Einfluß genommen werden, indem die Querschnittsflächenbereiche der Stirnflächen der Segmentelemente, die mit dem Schmelzbad in direkte Berührung kommen, örtlich nicht gleich sind. Hierzu gibt es die verschiedensten Möglichkeiten wie die Änderung der Abstände der einzelnen Segmentleiter in radialer Richtung und die Anordnung der einzelnen Segmentelemente mit konstantem Abstand in dieser Richtung und der damit verbundenen Querschnittsflächenvergrößerung der mit der Schmelze in Kontakt stehenden Schnittflächen durch die größere Längsausdehnung der äußeren Segmentelemente. Bei den röhren- oder halbröhrenförmigen Segmentleitern kann deren Durchmesser in radial äußerer Richtung ansteigen.

Die einzelnen Elektrodensegmente können als geschlossener Kreisring angeordnet oder mit Lücken zwischen ihnen auf dem Bodenblech befestigt sein und ggf. ebenfalls zur gezielten Beeinflussung des magnetischen Feldes unsymmetrisch angeordnet werden.

Die Anordnung der Segmentleiter auf den einzelnen Elektrodensegmenten kann in Form von parallelen Reihen oder als Kreisringsegmente erfolgen. Die Form der Elektrodensegment-Grundfläche sollte bevorzugt trapezförmig oder die Form eines Kreissegmentes haben. Bei den Kreissegmenten sollte jedoch in deren zur Spitze weisenden Bereich, der in montiertem Zustand zum Zentrum des Ofens weist, keine Segmentleiter befestigt sein, um den verschleißfördernden Einflüssen des Lichtbogens und der turbulenten Schmelzbadbewegung in diesem Bereich Rechnung zu tragen. Trapezförmige Elektrodensegmente, die einen Elektrodenring bilden, weisen ohnehin dort einen freien Bereich auf.

Besonders günstig können diese Variationsmöglichkeiten zur Beeinflussung der Schmelzbadtemperatur im Bereich des exzentrischen Ofenabstichs durch gezielte Auslenkung des Lichtbogens in dieser Richtung angewendet werden.

Durch die Wärmeabgabe der Segmentleiter in der Stampfmasse im unteren Bereich und den geringen Wärmetransport von der Schmelze zum Gefäßboden sowie der niedrigen Strombelastung der Elemente kann unter Umständen auf eine zusätzliche Kühlung verzichtet werden. Sollte sie trotzdem erforderlich sein, kann sie schwächer dimensioniert und durch die Gestaltung des gesamten Untergefäßes mit der beschriebenen Anordnung der stromführenden Teile äußert günstig unterhalb des Herdbereiches bevorzugt als Luftkühlung angebracht werden.

Da der Gleichstrom-Lichtbogenofen aus einem Unter- und einem Obergefäß besteht, kann die Montage zusätzlich vereinfacht werden bzw. kann ein bereits vormontiertes Untergefäß unter das unbeschädigte alte Obergefäß gesetzt werden, so daß die Stillstandszeit des Ofens verringert werden kann.

Nachfolgend soll die Erfindung anhand eines Ausführungsbeispieles näher erläutert werden.
- Fig. 1: zeigt in einer Schnittdarstellung eine Seitenansicht eines Gleichstrom-Lichtbogenofens;
- Fig. 2: eine entsprechende Schnittdarstellung der Draufsicht;
- Fig. 3: ein trapezförmiges Elektrodensegment;
- Fig. 4: ein Elektrodensegment mit verschieden geformten Segmentleitern, und
- Fig. 5: eine Seitenansicht eines befestigten Elektrodensegmentes.

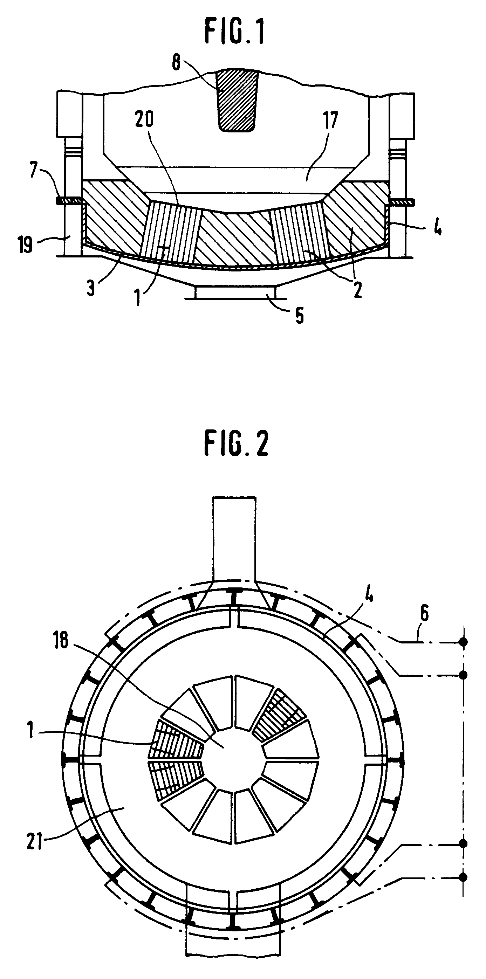

Bei einer Ausführungsform der Erfindung, wie in Fig. 1 dargestellt, ist erkennbar, daß Elektrodensegmente 1 auf einem Bodenblech 3, das Kalottenform hat oder eben ausgeführt ist, im Bereich des Schmelzbades 17 befestigt sind. Auf den Elektrodensegmenten 1 sind in paralleler Anordnung Segmentleiter 12 verschweißt. Die Herdzustellung des Gleichstrom-Lichtbogenofens wird durch eine elektrisch nichtleitende Stampfmasse 2 gebildet, die auch die Zwischenräume zwischen den Segmentleitern 12 ausfüllt, und zwar so weit, daß die oberen Stirnflächen 20 gerade mit dem Schmelzbad 17 in Berührung kommen. Auch die segmentfreie Bodenmitte 18 und der radial äußere Bereich der Zustellung 21 besteht aus Stampfmasse 2. Der Gleichstrom-Lichtbogenofen besteht aus einem Unter- und einem Obergefäß, dessen Gefäßwände 7 und 19 in der Figur erkennbar sind.

Die Elektrodensegmente 1 sind so angeordnet, daß im Bereich der segmentfreien Bodenmitte 18 der als bewegliche Oberelektrode ausgeführten Kathode 8 keine Segmentleiter 12 vorhanden sind.

Das Bodenblech 3 steht in direktem elektrischen Kontakt mit dem ebenfalls an der Innenseite von der nichtleitenden elektrischen Stampfmasse 2 umschlossenen, an der Gefäßwand 19 des Untergefäßes anliegenden Kupferring 4, der wiederum, wie aus Fig. 2 ersichtlich, mit seitlich angebrachten Stromschienen 6 verbunden ist, so daß der elektrische Strom über diese Elemente bis zu den Segmentleitern 12 fließt und die Ausbildung eines Lichtbogens gegeben ist. Daraus ergibt sich ein zusätzlicher positiver Effekt, indem unterhalb des Ofens keine stromführenden Teile vorhanden sind, die besonders bei Durchbrüchen der Zustellung gefährdet wären und dieser Platz nun für die Zu- und Abführung von Kühlluft 5 genutzt werden kann.

In der in Fig. 2 dargestellten Draufsicht eines Gleichstrom-Lichtbogenofens ist die ringförmige Anordnung von in diesem Falle zwölf Elektrodensegmenten 1 um den Mittelpunkt des Ofens erkennbar, da sich die in dieser Ansicht nicht sichtbare Oberelektrode 8 bei diesem Ofen zentrisch oberhalb des Schmelzbades 17 befindet. Der direkte Einflußbereich des Lichtbogens ist mit dieser Form und Formation der Elektrodensegmente 1 in günstiger Weise von Segmentleitern 12, der dem Herdverschleiß besonders ausgesetzt ist, freigehalten. In dieser Darstellung sind lediglich auf drei Elektrodensegmenten 1 Segmentleiter 12 in paralleler Reihenanordnung eingezeichnet, selbstverständlich befinden sich auf den übrigen neun Elektrodensegmenten 1 ebenfalls entsprechende Segmentleiter 12.

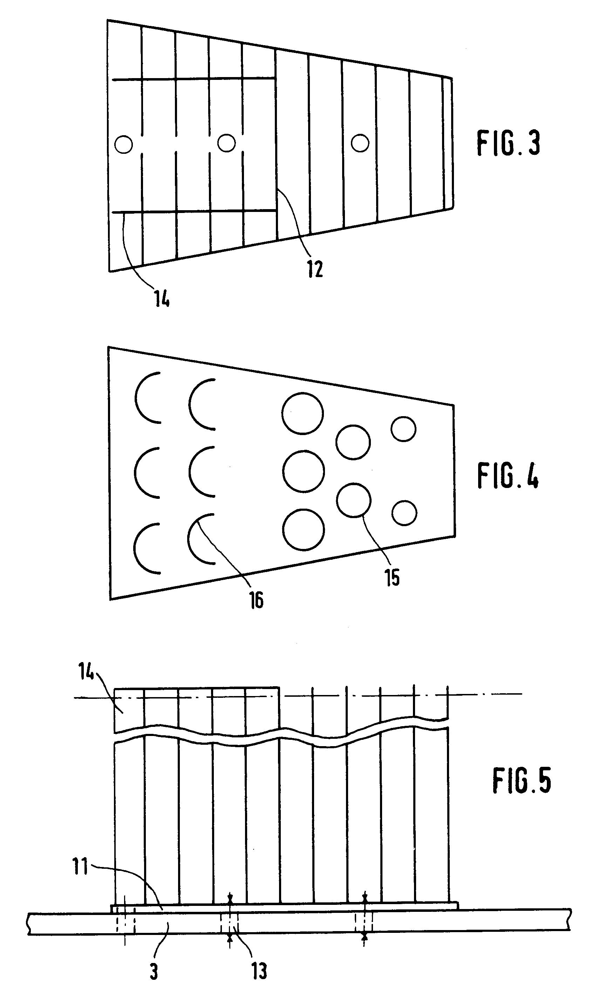

Bei dem Elektrodensegment gemäß Fig. 3 sind Segmentleiter 12 reihenweise in paralleler Anordnung vertikal auf eine Fußplatte geschweißt. Um besonders die längeren Segmentleiter 12 in definiertem Abstand zueinander zu fixieren, sind Abstandshalter 14 zwischen jeweils benachbarten Segmentleitern an diesen befestigt, so daß auch bei Einbringen der Stampfmasse 2 keine Verschiebungen auftreten können. Die Abstandshalter 14 können ebenfalls aus Stahl sein und an den Segmentleitern 12 so befestigt sein, daß sie in das Schmelzbad 17 hineinragen.

Auf dem in Fig. 4 dargestellten Elektrodensegment 1 sind zwei Formen von Segmentleitern 15 und 16 dargestellt. Die Segmentleiter 16 sind U-förmig (halbröhrenförmig) gebogen und mit der einen Stirnseite auf der Fußplatte 11 befestigt. Die in eingebautem Zustand des Elektrodensegmentes 1 in radial innerer Richtung befestigten Segmentleiter 15 sind röhrenförmig. Sowohl die halbröhrenförmigen Segmentleiter 16 als auch die röhrenförmigen Segmentleiter 15 weisen in dieser Richtung jeweils reihenweise kleinere Durchmesser auf.

Bei den Segmentleitern 16 und 15 kann auf die Fixierung weitestgehend verzichtet werden, da durch diese Gestaltung eine ausreichende Stabilität erreicht wird. Im Gegensatz zu den Segmentleitern 12 weisen beide auch Vorteile auf, indem die mit dem Schmelzbad in Berührung kommenden Querschnittsflächen in einfacher Weise durch unterschiedliche Radien variierbar sind.

Um günstiges Wärmeübergangsverhalten der Segmentleiter 12, 16 und 15 zu sichern, sollte die Dicke bzw. Wandstärke maximal 5 mm betragen.

In Fig. 5 ist eine Seitenansicht eines Elektrodensegmentes 1 dargestellt, das über Segmentleiter 12 verfügt, die in vertikaler Richtung auf der Fußplatte 11 verschweißt sind. Außerdem ist die Fußplatte auf dem unteren Herdboden mit Befestigungelementen 13 befestigt. Hierbei ist es besonders günstig, wenn diese Elemente zum Herdboden hin elektrisch isoliert ausgeführt sind.

## Patentansprüche

1. Gleichstrom-Lichtbogenofen mit einer als Kathode geschalteten mittigen Lichtbogenelektrode (8) und einer als Anode geschalteten Bodenelektrode, die mit einer Stromschienenanordnung (6) verbunden ist, bei dem das Bodenfutter wenigstens zu einem überwiegenden Teil aus einer elektrisch nichtleitenden Stampfmasse (2) besteht, in die elektrisch leitende Metallteile (12) in Form von Blecheinlagen, Stiften oder Stangen eingebracht sind, deren obere Stirnflächen (20) als Berührungsflächen mit der Schmelze (17) in leitendem Kontakt stehen,
dadurch **gekennzeichnet,**
daß auf die als Bodenblech (3) ausgebildete elektrische Zuleitung in unmittelbarem flächigen Kontakt mit dieser stehend eine Mehrzahl von Elektrodensegmenten (1) angeordnet ist, deren Gesamtheit sich zu einem Elektrodenring ergänzt, daß in radialer Anordnung auf jedem der Elektrodensegmente (1) jeweils eine Vielzahl sich in Aufwärtsrichtung durch die Stampfmasse (2) hindurch erstreckende Segmentleiter (12) mit geringen Querschnitten, die die elektrisch leitenden Metallteile bilden, befestigt sind, deren fußseitige Stirnflächen mit dem jeweiligen Elektrodensegment verbunden sind und deren obere freie Stirnflächen (20) mit dem Schmelzbad (17) innerhalb des Ofengefäßes in Kontakt stehen, daß die ohne bestimmten Schichtaufbau verfüllte Stampfmasse (2) wenigstens den Bereich der Elektrodensegmente (1) oberhalb der Bodenelektrode vollständig bis hin zu den Stirnflächen (20) der Segmentleiter (12) ausfüllt und daß der elektrische Strom von der Stromschienenanordnung (6) zu einem Kupferring (4) an der unteren Gefäßaußenwand (19) und von dort über das Boden blech (3) zu den Elektrodensegmenten (1) geführt ist.

2. Gleichstrom-Lichtbogenofen nach Anspruch 1,
dadurch gekennzeichnet, daß die Zustellung in der segmentfreien Bodenmitte (18) und dem radial äußeren Bereich (21) zwischen dem Ring der Elektrodensegmente (1) und der Gefäßwand (19) gleichfalls aus Stampfmasse (2) besteht.

3. Gleichstrom-Lichtbogenofen nach Anspruch 1,
dadurch gekennzeichnet, daß die Zustellung in dem radial äußeren Bereich (21) aus einer Ausmauerung elektrisch nichtleitender Ziegel besteht.

4. Gleichstrom-Lichtbogenofen nach Anspruch 1, 2 oder 3,
dadurch gekennzeichnet, daß die mit dem Schmelzbad (17) in elektrisch leitender Verbindung stehenden Querschnittsflächen der Stirnflächen (20) der Segmentleiter (12) konstant sind, so daß sich eine gleichmäßige Verteilung ergibt.

5. Gleichstrom-Lichtbogenofen nach Anspruch 1, 2 oder 3,
dadurch gekennzeichnet, daß die mit dem Schmelzbad (17) in elektrisch leitender Verbindung stehende Querschnittsfläche der Stirnflächen (20) der Segmentleiter (12) in radial äußerer Richtung zunimmt.

6. Gleichstrom-Lichtbogenofen nach Anspruch 1, 2, 3 oder 4,
dadurch gekennzeichnet, daß die Abstände der Segmentleiter (12) in radial äußerer Richtung zunehmen.

7. Gleichstrom-Lichtbogenofen nach Anspruch 1, 2, 3, 4 oder 5,
dadurch gekennzeichnet, daß die Abstände der Segmentleiter (12) in radial äußerer Richtung konstant sind.

8. Gleichstrom-Lichtbogenofen nach einem der Ansprüche 1 bis 7,
dadurch gekennzeichnet, daß die Segmentleiter (12) aus Blechen bestehen.

9. Gleichstrom-Lichtbogenofen nach einem der Ansprüche 1 bis 7,
dadurch gekennzeichnet, daß die Segmentleiter (12) Metallstäbe sind.

10. Gleichstrom-Lichtbogenofen nach einem der Ansprüche 1 bis 7,
dadurch gekennzeichnet, daß die Segmentleiter (15) röhrenförmig sind.

11. Gleichstrom-Lichtbogenofen nach einem der Ansprüche 1 bis 7,
dadurch gekennzeichnet, daß die Segmentleiter (16) halbröhrenförmig sind.

12. Gleichstrom-Lichtbogenofen nach Anspruch 10 oder 11,
dadurch gekennzeichnet, daß die röhrenförmigen bzw. halbröhrenförmigen Segmentleiter (15, 16) mit einer ihrer kreisförmigen bzw. halbkreisförmigen Stirnflächen auf der Fußplatte (11) der Elektrodensegmente (1) befestigt sind.

13. Gleichstrom-Lichtbogenofen nach einem der Ansprüche 1 bis 8,
dadurch gekennzeichnet, daß zwischen den Segmentleitern (12) Abstandshalter (14) an diesen befestigt sind.

14. Gleichstrom-Lichtbogenofen nach einem der Ansprüche 10 bis 12,
dadurch gekennzeichnet, daß die Anzahl oder die Durchmesser der röhren- bzw. halbröhrenförmigen Segmentleiter (15, 16) in radial innerer Richtung abnehmen.

15. Gleichstrom-Lichtbogenofen nach einem der Ansprüche 1 bis 14,
dadurch gekennzeichnet, daß in radial äußerer Richtung unterschiedliche Blechdicken für die Segmentleiter (12, 15, 16) vorgesehen sind.

16. Gleichstrom-Lichtbogenofen nach Anspruch 15,
dadurch gekennzeichnet, daß die Blechdicke maximal 5 mm beträgt.

17. Gleichstrom-Lichtbogenofen nach einem der Ansprüche 1 bis 16,
dadurch gekennzeichnet, daß die Elektrodensegmente (1) trapezförmig sind.

18. Gleichstrom-Lichtbogenofen nach einem der Ansprüche 1 bis 16,
dadurch gekennzeichnet, daß die Elektrodensegmente (1) in ihrer Grundfläche die Form von Kreissegmenten haben.

19. Gleichstrom-Lichtbogenofen nach einem der Ansprüche 1 bis 18,
dadurch gekennzeichnet, daß die Segmentleiter (12, 15, 16) auf den einzelnen Elektrodensegmenten (1) gleich verteilt sind.

20. Gleichstrom-Lichtbogenofen nach einem der Ansprüche 1 bis 18,
dadurch gekennzeichnet, daß die Segmentleiter (12, 15, 16) auf den einzelnen Elektrodensegmenten (1) ungleich verteilt sind.

21. Gleichstrom-Lichtbogenofen nach einem der Ansprüche 1 bis 18 und 20,
dadurch gekennzeichnet, daß im Bereich eines exzentrischen Ofenabstichs die Anzahl und/oder die Querschnittsfläche der mit dem Schmelzbad (17) in Berührung kommenden Stirnflächen (20) der Segmentleiter (12, 15, 16) unterschiedlich zu den übrigen Bereichen der Elektrodensegmente (1) ist.

22. Gleichstrom-Lichtbogenofen nach einem der Ansprüche 1 bis 21,
dadurch gekennzeichnet, daß im zentralen unteren Ofenbereich eine Kühlluftzuführung (5) vorhanden ist.

23. Gleichstrom-Lichtbogenofen nach einem der Ansprüche 1 bis 22,
dadurch gekennzeichnet, daß der Gleichstrom-Lichtbogenofen aus einem Untergefäß, in dem sämtliche Einzelbestandteile, die seine Anode bilden, angeordnet sind, und einem aufgesetzten Obergefäß besteht.

24. Gleichstrom-Lichtbogenofen nach einem der Ansprüche 1 bis 23,
dadurch gekennzeichnet, daß die Segmentleiter (12, 15, 16) aus dem Metall des Schmelzgutes bestehen.

25. Gleichstrom-Lichtbogenofen nach Anspruch 1,
dadurch gekennzeichnet,
daß die Isolation der Anode gegenüber dem oberen Gehäuseteil in der Gehäusewandung integriert ist.

## Claims

1. Direct current arc furnace with a central arc electrode (8) switched as cathode and a floor electrode switched as anode and connected to a conductor-rail arrangement (6), in which the floor lining is at least predominantly composed of an electrically non-conductive monolithic lining material (2), into which electrically conductive metal parts (12) are inserted in the form of sheet metal inserts, pins or rods, the upper faces (20) of which forming contact surfaces in conductive contact with the melt (17), characterised in that a number of electrode segments (1) are arranged on the electrical feed line constructed as a bottom plate (3) to stand in direct surface contact therewith and in their entirety form an electrode ring; that a plurality of segment conductors (12) with small cross-sections extending upwards through the monolithic lining material (2) are fastened in radial arrangement to each of the electrode segments (1), said segment conductors forming the electrically conductive metal parts, their faces on the base side being connected to the respective electrode segment and their upper free faces (20) being in contact with the melting bath (17) inside the furnace vessel; that the lining material (2) applied without any specific layered structure completely fills at least the area of the electrode segments (1) above the floor electrode as far as the faces (20) of the segment conductors (12); and that the electric current is directed from the conductor-rail arrangement (6) to a copper ring (4) on the lower outer wall (19) of the vessel and from there via the bottom plate (3) to the electrode segments (1).

2. Direct current arc furnace according to Claim 1, characterised in that the lining in the segment-free centre (18) of the floor and the radially outer region (21) between the ring of the electrode segments (1) and the vessel wall (19) is also made of monolithic lining material (2).

3. Direct current arc furnace according to Claim 1, characterised in that the lining in the radially outer region (21) consists of brickwork of electrically non-conductive bricks.

4. Direct current arc furnace according to Claim 1, 2 or 3, characterised in that the cross-sectional surfaces of the faces (20) of the segment conductors (12) in electrically conductive connection with the melting bath (17) are constant, thus resulting in a uniform distribution.

5. Direct current arc furnace according to Claim 1, 2 or 3, characterised in that the cross-sectional surface of the faces (20) of the segment conductors (12) in electrically conductive connection with the melting bath (17) increases in radially outward direction.

6. Direct current arc furnace according to Claim 1, 2, 3 or 4, characterised in that the distances between the segment conductors (12) increase in radially outward direction.

7. Direct current arc furnace according to Claim 1, 2, 3, 4 or 5, characterised in that the distances between the segment conductors (12) are constant in radially outward direction.

8. Direct current arc furnace according to one of Claims 1 to 7, characterised in that the segment conductors (12) are made of metal sheets.

9. Direct current arc furnace according to one of Claims 1 to 7, characterised in that the segment conductors (12) are metal bars.

10. Direct current arc furnace according to one of Claims 1 to 7, characterised in that the segment conductors (15) are tubular.

11. Direct current arc furnace according to one of Claims 1 to 7, characterised in that the segment conductors (16) are semi-tubular.

12. Direct current arc furnace according to Claim 10 or 11, characterised in that the tubular or semi-tubular segment conductors (15, 16) are fastened on the base plate (11) of the electrode segments (1) by one of their circular or semi-circular faces respectively.

13. Direct current arc furnace according to one of Claims 1 to 8, characterised in that spacers (14) are arranged between the segment conductors (12) and fastened to them.

14. Direct current arc furnace according to one of Claims 10 to 12, characterised in that the number or diameters of the tubular or semi-tubular segment conductors (15, 16) decrease in radially inward direction.

15. Direct current arc furnace according to one of Claims 1 to 14, characterised in that the segment conductors (12, 15, 16) are provided with different sheet thicknesses in radially outward direction.

16. Direct current arc furnace according to Claim 15, characterised in that the sheet thickness amounts to a maximum of 5 mm.

17. Direct current arc furnace according to one of Claims 1 to 16, characterised in that the electrode segments (1) are trapezoidal.

18. Direct current arc furnace according to one of Claims 1 to 16, characterised in that the electrode segments (1) are shaped as circular segments in their basic area.

19. Direct current arc furnace according to one of Claims 1 to 18, characterised in that the segment conductors (12, 15, 16) are evenly distributed on the individual electrode segments (1).

20. Direct current arc furnace according to one of Claims 1 to 18, characterised in that the segment conductors (12, 15, 16) are unevenly distributed on the individual electrode segments (1).

21. Direct current arc furnace according to one of Claims 1 to 18 and 20, characterised in that in the area of an eccentric discharge opening in the furnace, the number and/or the cross-sectional surface of the faces (20) of the segment conductors (12, 15, 16) coming into contact with the melting bath (17) is different from the other areas of the electrode segments (1).

22. Direct current arc furnace according to one of Claims 1 to 21, characterised in that a cooling air supply means (5) is provided in the central lower region of the furnace.

23. Direct current arc furnace according to one of Claims 1 to 22, characterised in that the d.c. arc furnace consists of a lower vessel, in which all the individual components forming its anode are arranged, and an attached upper vessel.

24. Direct current arc furnace according to one of Claims 1 to 23, characterised in that the segment conductors (12, 15, 16) are made of the metal of the melt material.

25. Direct current arc furnace according to Claim 1, characterised in that the insulation of the anode from the upper housing portion is integrated into the housing wall.

## Revendications

1. Four à arc à courant continu comprenant une électrode d'arc centrale (8), constituant une cathode, et une électrode de fond, constituant une anode, qui est reliée à un ensemble de barres conductrices (6), dans lequel le revêtement de fond est composé, du moins en majeure partie, d'un réfractaire damé (2) non conducteur de l'électricité, dans lequel sont disposées des pièces métalliques (12) conductrices de l'électricité, présentées sous la forme d'insertions en tôle, de tiges ou de barres dont les surfaces frontales supérieures (20) forment des surfaces de contact et sont en contact conducteur avec le bain fondu (17),
caractérisé en ce que, sur l'amenée d'électricité, constituée par la tôle de fond (3), sont disposés, en contact intégral direct avec cette tôle, plusieurs segments d'électrode (1) dont l'ensemble se complète pour former une couronne d'électrodes, en ce que plusieurs conducteurs de segments (12) qui traversent le réfractaire damé de bas en haut, qui sont de petite section et qui forment des pièces métalliques conductrices de l'électricité, sont fixés dans une disposition radiale sur chacun des segments d'électrode (1), les surfaces frontales inférieures de ces conducteurs étant connectées au segment d'électrode correspondant et leur surface frontale libre supérieure (20) étant en contact avec le bain fondu (17) à l'intérieur de la cuve du four, en ce que le réfractaire damé (2), qui est coulé sans construction stratifiée déterminée, comble entièrement, jusqu'aux surfaces frontales (20) des conducteurs (12) des segments, au moins la région des segments d'électrode (1) qui surmonte l'électrode de fond, et en ce que le courant électrique est transmis de l'amenée (6) formée de barres d'alimentation à un anneau en cuivre (4) prévu sur la paroi inférieure (19) de la cuve et, de là, est transmis aux segments d'électrode (1) par l'intermédiaire de la tôle de fond (3).

2. Four à arc à courant continu selon la revendication 1, caractérisé en ce que le revêtemest est également composé de réfractaire damé (2) au centre (18) du fond, qui est libre de segments, et dans la région radialement extérieure (21), comprise entre la couronne des segments d'électrode (1) et la paroi (19) de la cuve.

3. Four à arc à courant continu selon la revendication 1, caractérisé en ce que, dans la région radialement extérieure (21), le revêtement est composé de briques non conductrices de l'électricité.

4. Four à arc à courant continu selon la revendication 1, 2 ou 3,
caractérisé en ce que les aires des surfaces frontales (20) des conducteurs (12) des segments qui sont en communication conductrice de l'électricité avec le bain fondu (17) sont constantes, de sorte qu'on obtient une distribution régulière.

5. Four à arc à courant continu selon la revendication 1, 2 ou 3,
caractérisé en ce que l'aire des surfaces frontales (20) des conducteurs (12) des segments qui sont en communication conductrice de l'électricité avec le bain fondu (17) croît lorsqu'on se dirige radialement vers l'extérieur.

6. Four à arc à courant continu selon la revendication 1, 2, 3 ou 4,
caractérisé en ce que les écartements des conducteurs (12) des segments croissent lorsqu'on se dirige radialement vers l'extérieur.

7. Four à arc à courant continu selon la revendication 1, 2, 3, 4 ou 5,
caractérisé en ce que les écartements des conducteurs (12) des segments sont constants lorsqu'on se dirige radialement vers l'extérieur.

8. Four à arc à courant continu selon l'une des revendications 1 à 7,
caractérisé en ce que les conducteurs (12) des segments sont constitués par des tôles.

9. Four à arc à courant continu selon l'une des revendications 1 à 7,
caractérisé en ce que les conducteurs (12) des segments sont des tiges métalliques.

10. Four à arc à courant continu selon l'une des revendications 1 à 7,
caractérisé en ce que les conducteurs (15) des segments sont tubulaires.

11. Four à arc à courant continu selon l'une des revendications 1 à 7,
caractérisé en ce que les conducteurs (16) des segments sont semi-tubulaires.

12. Four à arc à courant continu selon la revendication 10 ou 11, caractérisé en ce que les conducteurs tubulaires ou semi-tubulaires (15, 16) des segments sont fixés à la plaque de fond (11) des segments d'électrode (1) par une de leurs surfaces frontales circulaires ou semi-circulaires.

13. Four à arc à courant continu selon l'une des revendications 1 à 8,
caractérisé en ce que des entretoises (14) sont fixées aux conducteurs (12) des segments, entre ces derniers.

14. Four à arc à courant continu selon l'une des revendications 10 à 12,
caractérisé en ce que le nombre ou le diamètre des conducteurs (15, 16) tubulaires ou semi-tubulaires décroissent lorsqu'on se dirige radialement vers l'intérieur.

15. Four à arc à courant continu selon l'une des revendications 1 à 14,
caractérisé en ce qu'il est prévu pour les conducteurs (12, 15, 16) des segments des épaisseurs de tôle qui varient dans la direction radiale en se dirigeant vers l'extérieur.

16. Four à arc à courant continu selon la revendication 15,
caractérisé en ce que l'épaisseur des tôles est au maximum de 5 mm.

17. Four à arc à courant continu selon l'une des revendications 1 à 16,
caractérisé en ce que les segments d'électrode (1) sont de forme trapézoïdale.

18. Four à arc à courant continu selon l'une des revendications 1 à 16,
caractérisé en ce que les segments d'électrode (1) ont à leur surface de base la forme de secteurs de cercle.

19. Four à arc à courant continu selon l'une des revendications 1 à 18,
caractérisé en ce que les conducteurs (12, 15, 16) des segments sont uniformément répartis sur les différents segments d'électrode (1).

20. Four à arc à courant continu selon l'une des revendications 1 à 18,
caractérisé en ce que les conducteurs (12, 15, 16) des segments sont répartis irrégulièrement sur les différents segments d'électrode (1).

21. Four à arc à courant continu selon l'une des revendications 1 à 18 et 20,
caractérisé en ce que, dans la zone d'un trou de coulée excentré, le nombre et/ou la section des frontales (20) des conducteurs (12, 15, 16) des segments qui entrent en contact avec le bain fondu (17) sont différents du nombre et de la section existant dans les autres zones des segments d'électrode (1).

22. Four à arc à courant continu selon l'une des revendications 1 à 21, caractérisé en ce que, dans la zone centrale inférieure du four, est prévue une amenée d'air de refroidissement (5).

23. Four à arc à courant continu selon l'une des revendications 1 à 22,
caractérisé en ce que le four à arc à courant continu est composé d'une cuve inférieure, dans laquelle sont disposés tous les constituants isolés qui forment son anode, et d'une cuve supérieure superposée à la première.

24. Four à arc à courant continu selon l'une des revendications 1 à 23,
caractérisé en ce que les conducteurs (12, 15, 16) des segments sont faits du métal du bain fondu.

25. Four à arc à courant continu selon la revendication 1,
caractérisé en ce que l'isolation de l'anode par rapport à la partie supérieure de la carcasse est intégrée dans la paroi de la carcasse.
